# EUROPEAN PATENT APPLICATION

(11) **EP 4 836 464 A1**
(43) Date of publication of application: **04.11.2026**
(21) Application number: 23962849.8
(22) Date of filing: 29.12.2023
(51) Int. Cl.: H04W 8/14, H04W 24/02, H04W 48/20

(54) **MULTI-AP COORDINATION METHOD, ACCESS POINT DEVICE, AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2023/143450
(87) International publication number: WO 2025/138175

(57) **Abstract**

The embodiments of the present disclosure relate to a multi-AP coordination method, an access point device, and a communication system. The multi-AP coordination method comprises: determining a first radio frame, the first radio frame being a multi-AP coordination establishment frame of multiple access point devices, the first radio frame comprising first identification information, and the first identification information being used for identifying that the first radio frame is a multi-AP coordination establishment request frame or a multi-AP coordination establishment response frame; and sending the first radio frame so as to further enhance a multi-AP coordination mechanism.

## Description

### FIELD

The present disclosure relates to the field of communication technology, and in particular, to a multi-ap coordination method, an access point device, and a communication system.

### BACKGROUND

Currently, research in Wi-Fi technology includes, for example, ultra high reliability (UHR), the vision of which is to improve the reliability of wireless local area network (WLAN) connections, reduce latency, enhance manageability, increase throughput at different signal-to-noise ratio (SNR) levels, and reduce device-level power consumption, etc.

In UHR, a multi-AP (multiple AP, M-AP) coordination mechanism will be further enhanced to achieve inter-BSS interference mitigation, improve user service quality, and guarantee the latency of low-latency services, among other requirements.

### SUMMARY

Embodiments of the present disclosure provide a method for coordinating multiple access points, an access point device, and a communication system, so as to further enhance a multi-AP coordination mechanism.

In a first aspect, an embodiment of the present disclosure provides a method for coordinating multiple access points, performed by a first access point device, the method including: determining a first frame, in which the first frame is a multi-AP coordination setup frame, the first frame includes first identification information, and the first identification information indicates the first frame as a multi-AP coordination setup request frame or a multi-AP coordination setup response frame; and sending the first frame.

In a second aspect, an embodiment of the present disclosure further provides a method for coordinating multiple access points, performed by a second access point device, the method including: receiving a first frame, in which the first frame is a multi-AP coordination setup frame, the first frame includes first identification information, and the first identification information indicates the first frame as a multi-AP coordination setup request frame or a multi-AP coordination setup response frame.

In a third aspect, an embodiment of the present disclosure further provides an access point device, the access point device being a first access point device, and including: a first determination module, configured to determine a first frame, in which the first frame is a multi-AP coordination setup frame, the first frame includes first identification information, and the first identification information indicates the first frame as a multi-AP coordination setup request frame or a multi-AP coordination setup response frame; and a first sending module, configured to send the first frame.

In a fourth aspect, an embodiment of the present disclosure further provides an access point device, the access point device being a second access point device, and including: a first receiving module, configured to receive a first frame, in which the first frame is a multi-AP coordination setup frame, the first frame includes first identification information, and the first identification information indicates the first frame as a multi-AP coordination setup request frame or a multi-AP coordination setup response frame.

In a fifth aspect, an embodiment of the present disclosure further provides an access point device, including: one or more processors, in which the access point device is configured to perform the method for coordinating multiple access points described in the first aspect or the second aspect of the embodiments of the present disclosure.

An embodiment of the present disclosure further provides a communication system, including a first access point device and a second access point device, in which the first access point device is configured to implement the method for coordinating multiple access points described in the first aspect of the embodiments of the present disclosure, and the second access point device is configured to implement the method for coordinating multiple access points described in the second aspect of the embodiments of the present disclosure.

An embodiment of the present disclosure further provides a storage medium storing instructions, when executed on a communication device, the communication device is caused to perform the method for coordinating multiple access points described in the first aspect of the embodiments of the present disclosure, or perform the method for coordinating multiple access points described in the second aspect of the embodiments of the present disclosure.

In the embodiments of the present disclosure, a first AP determines a first frame, the first frame is a multi-AP coordination setup frame, and the first identification information carried in the first frame identifies the first frame as a multi-AP coordination setup request frame or a multi-AP coordination setup response frame. In this way, a multi-AP coordination setup request or a multi-AP coordination setup response can be implemented via the first frame, thereby establishing a coordination among multiple access point devices through an interaction among the multiple APs via the multi-AP coordination setup frame.

Additional aspects and advantages of the embodiments of the present disclosure will be set forth in part in the description which follows, and will become apparent from the description, or may be learned by practice of the present disclosure.

### BRIEF DESCRIPTION OF THE DRAWINGS

In order to more clearly illustrate the technical solutions in the embodiments of the present disclosure, the drawings required for the description of the embodiments are introduced below. The following drawings are merely some embodiments of the present disclosure and do not impose specific limitations on the protection scope of the present disclosure.
FIG. 1 is an exemplary schematic diagram of an architecture of a communication system according to an embodiment of the present disclosure.
FIG. 2 is a first exemplary interaction schematic diagram of a method for coordinating multiple APs according to an embodiment of the present disclosure.
FIG. 3 is a second exemplary interaction schematic diagram of a method for coordinating multiple APs according to an embodiment of the present disclosure.
FIG. 4 is a first flow schematic diagram of a method for coordinating multiple APs according to an embodiment of the present disclosure.
FIG. 5 is a second flow schematic diagram of a method for coordinating multiple APs according to an embodiment of the present disclosure.
FIG. 6 is a first structural schematic diagram of an access point device according to an embodiment of the present disclosure.
FIG. 7 is a second structural schematic diagram of an access point device according to an embodiment of the present disclosure.
FIG. 8 is a structural schematic diagram of a terminal according to an embodiment of the present disclosure.
FIG. 9 is a structural schematic diagram of a chip according to an embodiment of the present disclosure.

### DETAILED DESCRIPTION

Embodiments of the present disclosure provide a method for coordinating multiple access points, an access point device, and a communication system.

In a first aspect, an embodiment of the present disclosure provides a method for coordinating multiple access points, performed by a first access point device (AP), the method including: determining a first frame, in which the first frame is a multi-AP coordination setup frame, the first frame includes first identification information, and the first identification information indicates the first frame as a multi-AP coordination setup request frame or a multi-AP coordination setup response frame; and sending the first frame.

In the foregoing embodiment, a first AP determines the first frame, the first frame is a multi-AP coordination setup frame, and the first identification information carried in the first frame identifies the first frame as a multi-AP coordination setup request frame or a multi-AP coordination setup response frame. In this way, a multi-AP coordination setup request or a multi-AP coordination setup response can be implemented via the first frame, thereby establishing a coordination among multiple access point devices through an interaction among the multiple APs via the multi-AP coordination setup frame.

With reference to some embodiments of the first aspect, in some embodiments, the first identification information is carried in a first information field of the first frame, and the first information field is carried in a first field of the first frame, in which in a case the first information field is set to a first parameter value, the first identification information identifies the first frame as the multi-AP coordination setup request frame; and in a case the first information field is set to a second parameter value, the first identification information identifies the first frame as the multi-AP coordination setup response frame.

In the foregoing embodiment, the first field in the first frame carries the first information field, the first information field carries the first identification information, and the first information field is set that: in a case the first information field is set to the first parameter value, the first identification information identifies the first frame as the multi-AP coordination setup request frame; in a case the first information field is set to the second parameter value, the first identification information identifies the first frame as the multi-AP coordination setup response frame. In this way, a device receiving the first frame can determine, through the parameter value in the first information field, whether the first frame is the multi-AP coordination setup request frame or the multi-AP coordination setup response frame.

With reference to some embodiments of the first aspect, in some embodiments, the first frame further includes second identification information and third identification information, the second identification information indicates one or more multi-AP coordination types, and the third identification information indicates coordination parameter information corresponding to the one or more multi-AP coordination types.

In the foregoing embodiment, the second identification information carried in the first frame identifies the one or more multi-AP coordination types, and the third identification information carried in the first frame identifies the coordination parameter information corresponding to each multi-AP coordination type identified by the second identification information, thereby implementing a negotiation of a coordination strategy for a multi-AP coordination setup and parameter information of a specific strategy through the first frame.

With reference to some embodiments of the first aspect, in some embodiments, the second identification information is carried in a second information field of the first frame, and the second information field is carried in the first field of the first frame; and the third identification information is carried in a second field of the first frame.

In the foregoing embodiment, the first field in the first frame carries the second information field, the second information field carries the second identification information; and the second field in the first frame carries the third identification information. In this way, a device receiving the first frame can, by parsing the first field and the second field, obtain the multi-AP coordination type requested or responded to by the first AP through the first frame and corresponding coordination parameter information.

With reference to some embodiments of the first aspect, in some embodiments, in a case the second information field is set to a preset parameter value, the second identification information identifies a multi-AP coordination type corresponding to the preset parameter value; or the second information field includes at least two bits, the at least two bits correspond to the one or more multi-AP coordination types, and the second identification information identifies a multi-AP coordination type corresponding to a target bit, in which a parameter value of the target bit is set to a third parameter value.

In the foregoing embodiment, the parameter value of the target bit is set to the third parameter value, and by configuring the second identification information to identify the multi-AP coordination type corresponding to the preset parameter value in the second information field, or configuring the second identification information to identify the multi-AP coordination type corresponding to the target bit in the second information field, ways of setting the multi-AP coordination type can be diversified.

With reference to some embodiments of the first aspect, in some embodiments, the first frame further includes fourth identification information and fifth identification information, the fourth identification information identifies a frame type of the first frame as an ultra high reliability (UHR) action frame, and the fifth identification information is set to a fourth parameter value, identifying a frame type of the UHR action frame as the multi-AP coordination setup frame.

In the foregoing embodiment, the fourth identification information carried in the first frame identifies the frame type of the first frame as the UHR action frame, and by setting the fifth identification information carried in the first frame to the fourth parameter value, the frame type of the UHR action frame is identified as the multi-AP coordination setup frame, thereby defining the multi-AP coordination setup frame.

With reference to some embodiments of the first aspect, in some embodiments, the first frame is the multi-AP coordination setup request frame, and the method further includes: receiving a second frame, in which the second frame is the multi-AP coordination setup response frame for the first frame.

In the foregoing embodiment, the first frame is the multi-AP coordination setup request frame, and by receiving the multi-AP coordination setup response frame for the first frame, a coordination among multiple access point devices is established through an interaction among the multiple APs via the multi-AP coordination setup frame.

With reference to some embodiments of the first aspect, in some embodiments, after receiving the second frame, the method further includes: sending a third frame, in which the third frame identifies that the second frame is received by the first access point device.

In the foregoing embodiment, the first frame is the multi-AP coordination setup request frame, and after receiving the multi-AP coordination setup response frame for the first frame, by sending the third frame, the device that received the first frame is informed that the second frame is received by the first access point device, thereby successfully establishing a coordination among multiple access point devices between the first access point device and the device that received the first frame.

In a second aspect, an embodiment of the present disclosure provides a method for coordinating multiple access points, performed by a second access point device, the method including: receiving a first frame, in which the first frame is a multi-AP coordination setup frame, the first frame includes first identification information, and the first identification information indicates the first frame as a multi-AP coordination setup request frame or a multi-AP coordination setup response frame.

With reference to some embodiments of the second aspect, in some embodiments, the first identification information is carried in a first information field of the first frame, and the first information field is carried in a first field of the first frame, in which in a case the first information field is set to a first parameter value, the first identification information identifies the first frame as the multi-AP coordination setup request frame; and in a case the first information field is set to a second parameter value, the first identification information identifies the first frame as the multi-AP coordination setup response frame.

With reference to some embodiments of the second aspect, in some embodiments, the first frame further includes second identification information and third identification information, the second identification information indicates one or more multi-AP coordination types, and the third identification information indicates coordination parameter information corresponding to the one or more multi-AP coordination types.

With reference to some embodiments of the second aspect, in some embodiments, the second identification information is carried in a second information field of the first frame, and the second information field is carried in the first field of the first frame. The third identification information is carried in a second field of the first frame.

With reference to some embodiments of the second aspect, in some embodiments, the second information field is set to a preset parameter value, the second identification information identifies a multi-AP coordination type corresponding to the preset parameter value; or the second information field includes at least two bits, the at least two bits correspond to the one or more multi-AP coordination types, and the second identification information identifies a multi-AP coordination type corresponding to a target bit, in which a parameter value of the target bit is set to a third parameter value.

With reference to some embodiments of the second aspect, in some embodiments, the first frame further includes fourth identification information and fifth identification information, the fourth identification information identifies a frame type of the first frame as an ultra high reliability (UHR) action frame, and the fifth identification information is set to a fourth parameter value, identifying a frame type of the UHR action frame as the multi-AP coordination setup frame.

With reference to some embodiments of the second aspect, in some embodiments, the first frame is the multi-AP coordination setup request frame, and the method further includes: determining a second frame, in which the second frame is the multi-AP coordination setup response frame for the first frame; and sending the second frame.

With reference to some embodiments of the second aspect, in some embodiments, after sending the second frame, the method further includes: receiving a third frame, in which the third frame identifies that the second frame is received by the first access point device.

In a third aspect, an embodiment of the present disclosure further provides an access point device, the access point device is a first access point device, and the first access point device includes at least one of a first determination module and a first sending module, in which the first access point device is configured to perform the optional implementations of the first aspect.

In a fourth aspect, an embodiment of the present disclosure further provides an access point device, the access point device is a second access point device, and the second access device includes a first receiving module, in which the second access point device is configured to perform the optional implementations of the second aspect.

In a fifth aspect, an embodiment of the present disclosure further provides an access point device, including: one or more processors, in which the access point device is configured to perform the optional implementations of the first aspect or the second aspect.

In a sixth aspect, an embodiment of the present disclosure further provides a communication system, including a first access point device and a second access point device, in which the first access point device is configured to perform the optional implementations described in the first aspect, and the second access point device is configured to perform the optional implementations described in the second aspect.

In a seventh aspect, an embodiment of the present disclosure further provides a storage medium storing instructions, when executed on a communication device, the communication device is caused to perform the optional implementations described in the first aspect or the second aspect.

In an eighth aspect, an embodiment of the present disclosure provides a program product, when executed by a communication device, the communication device is caused to perform the method described in the optional implementations of the first aspect or the second aspect.

In a ninth aspect, an embodiment of the present disclosure provides a computer program, when running on a computer, the computer is caused to perform the method described in the optional implementations of the first aspect or the second aspect.

In a tenth aspect, an embodiment of the present disclosure provides a chip or a chip system. The chip or the chip system includes a processing circuit, configured to perform the method described in the optional implementations of the first aspect or the second aspect.

It can be understood that the access point device, communication system, storage medium, program product, computer program, chip or chip system described above are all configured to perform the method provided by the embodiments of the present disclosure. Therefore, the beneficial effects that can be achieved by them may refer to the beneficial effects in the corresponding method and will not be repeated here.

The embodiments of the present disclosure provide a method for coordinating multiple APs, an access point device, and a communication system. In some embodiments, terms such as "method for coordinating multiple Aps" and "signal sending method", "frame sending method" may be used interchangeably, and terms such as "information processing system" and "communication system" may be used interchangeably.

The embodiments of the present disclosure are not exhaustive, but merely serve as illustrations of some embodiments and do not impose specific limitations on the protection scope of the present disclosure. Without contradiction, each step in a certain embodiment can be implemented as an independent embodiment, and the steps can be arbitrarily combined. For example, a scheme obtained by removing some steps from a certain embodiment can also be implemented as an independent embodiment, and the order of the steps in a certain embodiment can be arbitrarily exchanged. In addition, the optional implementations in a certain embodiment can be arbitrarily combined. Furthermore, various embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified and without logical conflict, the terms and/or descriptions between the embodiments are consistent and can be referenced to each other, and the technical features in different embodiments can be combined to form new embodiments according to their internal logical relationships.

The terms used in the embodiments of the present disclosure are only for the purpose of describing specific embodiments and are not imposed to limit the present disclosure.

In the embodiments of the present disclosure, "a plurality of" means two or more.

In some embodiments, terms such as "at least one of", "one or more", "a plurality of", "multiple" may be used interchangeably.

In some embodiments, expressions such as "at least one of A and B", "A and/or B", "in one case A, in another case B", "in response to a case A, in response to another case B", etc., may include the following technical solutions depending on the situation: in some embodiments A (A is performed regardless of B); in some embodiments B (B is performed regardless of A); in some embodiments selecting from A and B to perform (A and B are selectively performed); in some embodiments A and B (both A and B are performed). Similar situations apply when there are more branches such as A, B, C, etc.

In some embodiments, expressions such as "A or B" may include the following technical solutions depending on the situation: in some embodiments A (A is performed regardless of B); in some embodiments B (B is performed regardless of A); in some embodiments selecting from A and B to perform (A and B are selectively performed). Similar situations apply when there are more branches such as A, B, C, etc.

The prefixes such as "first", "second" in the embodiments of the present disclosure are only used to distinguish different described objects and do not constitute limitations on the position, order, priority, quantity, or content of the described objects. Statements about the described objects should refer to the descriptions in the claims or the context of the embodiments, and no redundant limitations should be imposed due to the use of the prefixes. For example, if the described object is "field", the ordinal number before "field" in "first field" and "second field" does not limit the position or order between the "fields", "first" and "second" do not limit whether the "fields" they modify are in the same message, nor do they limit the order of "first field" and "second field". As another example, if the described object is "level", the ordinal number before "level" in "first level" and "second level" does not limit the priority between the "levels". As yet another example, the quantity of the described object is not limited by the ordinal number and can be one or more. Taking "first device" as an example, the quantity of "device" can be one or more. In addition, the objects modified by different prefixes may be the same or different. For example, if the described object is "device", "first device" and "second device" may be the same device or different devices, and their types may be the same or different. As another example, if the described object is "information", "first information" and "second information" may be the same information or different information, and their content may be the same or different.

In some embodiments, "comprising A", "including A", "used to indicate A", "carrying A" may be interpreted as directly carrying A or indirectly indicating A.

In some embodiments, terms such as "in response to...", "in response to determining...", "in a case...", "at...", "when...", "if...", "provided that..." may be used interchangeably.

In some embodiments, terms such as "greater than", "greater than or equal to", "not less than", "more than", "more than or equal to", "not less than", "higher than", "higher than or equal to", "not lower than", "above" may be used interchangeably, and terms such as "less than", "less than or equal to", "not greater than", "less than", "less than or equal to", "not more than", "lower than", "lower than or equal to", "not higher than", "below" may be used interchangeably.

In some embodiments, an apparatus and a device may be interpreted as being physical or virtual, and their names are not limited to those recorded in the embodiments. In some cases, they may also be understood as "equipment", "device", "circuit", "network element", "node", "function", "unit", "section", "system", "network", "chip", "chip system", "entity", "subject", etc.

In some embodiments, "network" may be interpreted as an apparatus included in the network, such as an access network device, a core network device, etc.

In some embodiments, acquisition of data, information, etc. may comply with the laws and regulations of the country where they are located.

In some embodiments, data, information, etc. may be acquired after obtaining user consent.

In addition, each element, each row, or each column in the tables of the embodiments of the present disclosure may be implemented as an independent embodiment, and any combination of elements, rows, and columns may also be implemented as an independent embodiment.

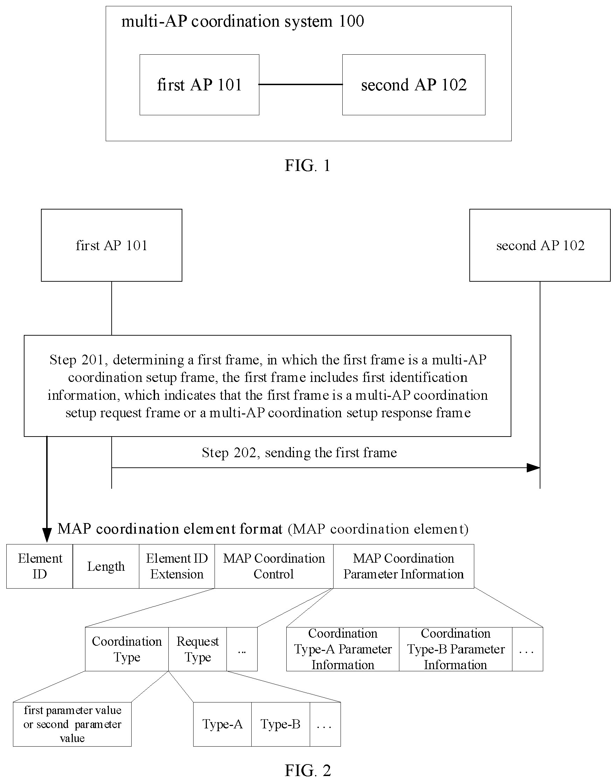

FIG. 1 is an architectural schematic diagram illustrating a multi-AP coordination system according to an embodiment of the present disclosure.

As shown in FIG. 1, a multi-AP coordination system 100 includes a first access point (AP) device 101 and a second AP device 102.

In some embodiments, the first access point device 101 and the second access point device 102 may be access points for a mobile terminal to enter a wired network. An AP works as a bridge connecting a wired network and a wireless network, and a main function of the AP is to connect various wireless network clients together and then connect the wireless network to the Ethernet. Specifically, the AP may be a terminal device or a network device with a Wi-Fi chip. Optionally, the AP may support various WLAN standards such as 802.11ax, 802.11be, 802.11ac, 802.11n, 802.11g, 802.11b and 802.11a, 802.11bf, 802.11bn, and support the next generation 802.11 protocol, but is not limited thereto.

Optionally, in the embodiments of the present disclosure, the AP and the STA (station) may be devices supporting multi-connection. For example, they may be respectively represented as an access point multi-link device (AP MLD) and a non-access point multi-link device (Non-AP MLD). The AP MLD may represent an access point supporting a multi-connection communication function, and the Non-AP MLD may represent a station supporting a multi-connection communication function.

In some embodiments, the station device includes, for example, a wireless communication chip supporting a Wi-Fi communication function, a wireless sensor, or a wireless communication terminal. Optionally, the wireless communication terminal is, for example, at least one of a mobile phone, a wearable device, an Internet of Things device supporting a Wi-Fi communication function, a vehicle supporting a Wi-Fi communication function, a smart vehicle, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but is not limited thereto.

Specifically, the station device may be a terminal device or a network device with a Wi-Fi chip. Optionally, a relay device 102 and a station device 103 may support various WLAN standards such as 802.11ax, 802.11be, 802.11ac, 802.11n, 802.11g, 802.11b and 802.11a, 802.11bf, 802.11bn, and support the next generation 802.11 protocol, but is not limited thereto.

It can be understood that the communication system described in the embodiments of the present disclosure is imposed to more clearly illustrate the technical solutions of the embodiments of the present disclosure, and does not constitute a limitation on the technical solutions provided by the embodiments of the present disclosure. Persons of ordinary skill in the art will know that as the system architecture evolves and new service scenarios emerge, the technical solutions provided by the embodiments of the present disclosure are also applicable to similar technical problems.

The following embodiments of the present disclosure may be applied to the communication system 100 shown in FIG. 1, or to some of the subjects therein, but are not limited thereto. The subjects shown in FIG. 1 are illustrative, and the communication system may include all or some of the subjects in FIG. 1, or may include other subjects besides those in FIG. 1. The quantity and form of each subject are arbitrary, each subject may be physical or virtual, and the connection relationships between the subjects are illustrative. The subjects may be unconnected or connected, and the connection may be in any way, either directly or indirectly, and either wired or wirelessly.

The embodiments of the present disclosure may be applied to a wireless local area network (WLAN), for example, a local area network adopting the 802.11 series of protocols. In a WLAN, a basic service set (BSS) is a fundamental component of a WLAN. A BSS network is composed of station devices that have certain associations within a specific coverage area. One case of association is that stations communicate directly with each other in an ad hoc network, which is called an independent BSS (IBSS). Another more common case is that in a BSS network, there is only one central station with the dedicated function of managing the BSS, called an access point device, while other stations in the BSS network that are not APs are called terminals, also referred to as non-AP STAs. APs and non-AP STAs are collectively referred to as STAs. When describing a STA, there is no need to distinguish between an AP and a non-AP STA. In the same BSS network, due to distance, transmission power, and other reasons, a STA cannot detect other STAs that are far away from it, and the two are hidden nodes to each other.

FIG. 2 is an interaction schematic diagram illustrating a method for coordinating multiple APs according to an embodiment of the present disclosure. As shown in FIG. 2, the method includes the following steps.

Step 201, a first AP 101 determines a first frame; the first frame is a multi-AP coordination setup frame (MAP Coordination setup frame; Multiple AP, MAP), in which the first frame includes first identification information, and the first identification information indicates the first frame as a multi-AP coordination setup request frame or a multi-AP coordination setup response frame.

In the existing 802.11 protocols, the main focus is on how to improve the throughput, rate, and access efficiency of a single BSS or a single AP, with relatively little research on coordinated transmission between multiple BSSs or multiple APs. With the trend of increasing quantity of frequency bands and higher frequencies supported by Wi-Fi devices, and with the diverse demands of communication services, density of WLAN device deployment increases. Consequently, the increasingly dense APs may bring more inter-cell interference and also increase the risk of access collisions.

In order to further enhance user service quality and overall network performance, in UHR, while pursuing improvements in communication rate, communication latency, and reliability within a single BSS, it is also necessary to perform multi-access point device coordination among multiple access point devices. Through cooperative collaboration among multiple access point devices, more rational allocation of communication resources can be achieved, communication quality can be ensured, access efficiency can be improved, and better network performance can be realized. The multi-AP coordination mainly aims at mitigating the inter-BSS interference, improving the user service quality, and reducing the latency by implementing coordination strategies such as time-frequency resource and frequency-domain resource sharing, spatial multiplexing, or joint transmission among multiple APs. However, there is a need to negotiate how to establish the multi-AP coordination and how to set up an efficient signaling for controlling a coordinated transmission among multiple APs.

In response to this, in the embodiments of the present disclosure, the first AP 101 determines the first frame, the first frame is a multi-AP coordination setup frame, and the first identification information carried in the first frame identifies the first frame as a multi-AP coordination setup request frame or a multi-AP coordination setup response frame. In this way, a multi-AP coordination setup request or a multi-AP coordination setup response can be implemented via the first frame, thereby establishing a coordination among multiple access point devices through an interaction among the multiple APs via the multi-AP coordination setup frame.

In the embodiments of the present disclosure, the first frame further includes fourth identification information and fifth identification information, the fourth identification information identifies a frame type of the first frame as a UHR action frame, and the fifth identification information is set to a fourth parameter value, identifying a frame type of the UHR action frame as a multi-AP coordination setup frame.

Optionally, the MAP coordination setup frame may be an action frame. The action field format of the MAP coordination setup frame is shown in Table 1 below:

**Table 1:**

| Order | Information |
|---|---|
| 1 | Category |
| 2 | UHR Action |
| 3 | Dialog Token |
| 4 | MAP Coordination element |

Referring to Table 1, the action field of the MAP Coordination setup frame sequentially includes: a category field, a UHR action field, a dialog token field, and a MAP coordination element. The category field indicates the category of the action frame. For example, the category field may be set to 38 to identify the UHR action frame, and the category field may be set to 39 to identify a protected UHR action frame. The UHR action field indicates the frame type of the UHR action frame. For example, the UHR Action field may be set to 0 to identify the frame type of the UHR action frame as the MAP coordination setup frame. The dialog token field indicates a current session, and the MAP coordination element indicates a frame content of the MAP coordination setup frame.

In the embodiments of the present disclosure, the first identification information is carried in a first information field of the first frame, and the first information field is carried in a first field of the first frame, in which in a case the first information field is set to a first parameter value, the first identification information identifies the first frame as the multi-AP coordination setup request frame, and in a case the first information field is set to a second parameter value, the first identification information identifies the first frame as the multi-AP coordination setup response frame.

Optionally, the first field may be a MAP coordination control field in the first frame, and the first information field may be a request type subfield in the MAP coordination control field.

Optionally, the first parameter value may be set to 1, and the second parameter value may be set to 0. Correspondingly, in a case the first information field is set to 1, the first identification information identifies the first frame as the multi-AP coordination setup request frame, and in a case the first information field is set to 0, the first identification information identifies the first frame as the multi-AP coordination setup response frame.

In the embodiments of the present disclosure, the first frame further includes second identification information and third identification information, the second identification information indicates one or more multi-AP coordination types, and the third identification information indicates coordination parameter information corresponding to the one or more multi-AP coordination types.

Optionally, the second identification information may be used to identify the one or more multi-AP coordination types. For example, assuming that the multi-AP coordination types may include C-SR coordination (coordination-spatial reuse, a coordination mechanism based on spatial reuse), C-TDMA coordination (coordination-time division multiple access, a coordination mechanism based on time division multiple access), and C-OFDMA coordination (coordination-orthogonal frequency division multiple access, a coordination mechanism based on orthogonal frequency division multiplexing), the second identification information may be used to identify C-SR coordination, C-TDMA coordination, C-OFDMA coordination, a combination of C-SR coordination and C-TDMA coordination, a combination of C-TDMA coordination and C-OFDMA coordination, a combination of C-SR coordination and C-OFDMA coordination, or a combination of C-SR coordination, C-TDMA coordination, and C-OFDMA coordination, and the present disclosure does not impose limitations on this.

It should be noted that the above multi-AP coordination types are merely examples, and specifically, the multi-AP coordination types may be changed according to communication requirements.

Optionally, the coordination parameter information of the multi-AP coordination types identified by the third identification information may correspond with the multi-AP coordination types identified by the second identification information in a one-to-one relationship, that is, the third identification information identifies the coordination parameter information of the multi-AP coordination types corresponding to a multi-AP coordination type identified by the second identification information.

As an example, if the second identification information identifies the C-SR coordination or the C-TDMA coordination, the third identification information identifies C-SR coordination parameters or C-TDMA coordination parameters; if the second identification information identifies the C-SR coordination and the C-TDMA coordination, the third identification information identifies C-SR coordination parameters and C-TDMA coordination parameters.

In the embodiments of the present disclosure, the second identification information carried in the first frame identifies one or more multi-AP coordination types, and the third identification information carried in the first frame identifies the coordination parameter information corresponding to the multi-AP coordination type identified by the second identification information, thereby implementing a negotiation of a coordination strategy for a multi-AP coordination setup and the parameter information of a specific strategy through the first frame.

In the embodiments of the present disclosure, the second identification information is carried in a second information field of the first frame, the second information field is carried in the first field of the first frame, and the third identification information is carried in a second field of the first frame.

Optionally, the first field may be a MAP coordination control field in the first frame, and the second information field may be a coordination type subfield in the MAP coordination control field. The second field may be a MAP coordination parameter information field in the first frame.

As shown in FIG. 2, the MAP coordination element includes the MAP coordination control field and the MAP coordination parameter information field.

The MAP coordination control field includes the coordination type subfield and the request type subfield, and the MAP coordination parameter information field includes coordination parameters corresponding to the coordination types identified by the coordination type subfield.

The first identification information includes the request type subfield, the second identification information includes the coordination type subfield, and the third identification information includes the MAP coordination parameter information field.

Optionally, the coordination parameter information of the multi-AP coordination types in the MAP coordination parameter information field corresponds with the multi-AP coordination types in the coordination type subfield in a one-to-one relationship.

As an example, referring to FIG. 2, in a case the coordination type subfield includes Type-A and Type-B, the MAP coordination parameter information field includes coordination parameter information coordination Type-A parameter information corresponding to Type-A and coordination parameter information coordination Type-B parameter information corresponding to Type-B.

In the embodiments of the present disclosure, in a case the second information field is set to a preset parameter value, the second identification information identifies a multi-AP coordination type corresponding to the preset parameter value, or the second information field includes at least two bits, the at least two bits correspond to the coordination types, the second identification information identifies a multi-AP coordination type corresponding to a target bit, and a parameter value of the target bit is set to a third parameter value.

In a case the second identification information identifies the multi-AP coordination type corresponding to the preset parameter value, the preset parameter values may correspond with the multi-AP coordination types in a one-to-one relationship. Taking the above-mentioned multi-AP coordination types including the C-SR coordination, the C-TDMA coordination, and the C-OFDMA coordination as an example, the preset parameter value may be set to 0, and the corresponding second identification information identifies the C-SR coordination; the preset parameter value may be set to 1, and the corresponding second identification information identifies the C-TDMA coordination; the preset parameter value may be set to 2, and the corresponding second identification information identifies the C-OFDMA coordination; the preset parameter value may be set to 3, and the corresponding second identification information identifies a combination of the C-SR coordination and the C-TDMA coordination. The present disclosure is not limited to this.

In a case the second identification information identifies the multi-AP coordination type corresponding to the bit set to the third parameter value, taking the above-mentioned multi-AP coordination types including the C-SR coordination, the C-TDMA coordination, and the C-OFDMA coordination as an example, the second information field may be set to include three bits, and the embodiments of the present disclosure are not limited to the correspondence between the three bits and the three coordination types. Assuming that the first bit corresponds to the C-SR coordination, the second bit corresponds to the C-TDMA coordination, the third bit corresponds to the C-OFDMA coordination, and the third parameter value is 1, if the second bit is set to 1, the second identification information identifies the C-TDMA coordination; if all the three bits are set to 1, the second identification information identifies a combined coordination type of the C-SR coordination, the C-TDMA coordination, and the C-OFDMA coordination.

Step 202, the first AP 101 sends the first frame to the second AP 102.

Optionally, if the first frame is a multi-AP coordination setup request frame, the first AP 101 sends the first frame to the second AP 102, thereby initiating a request to the second AP 102 to establish the multi-AP coordination.

If the first frame is a multi-AP coordination setup response frame, the first AP 101 sends the first frame to the second AP 102, thereby responding to the multi-AP coordination establishment request initiated by the second AP 102.

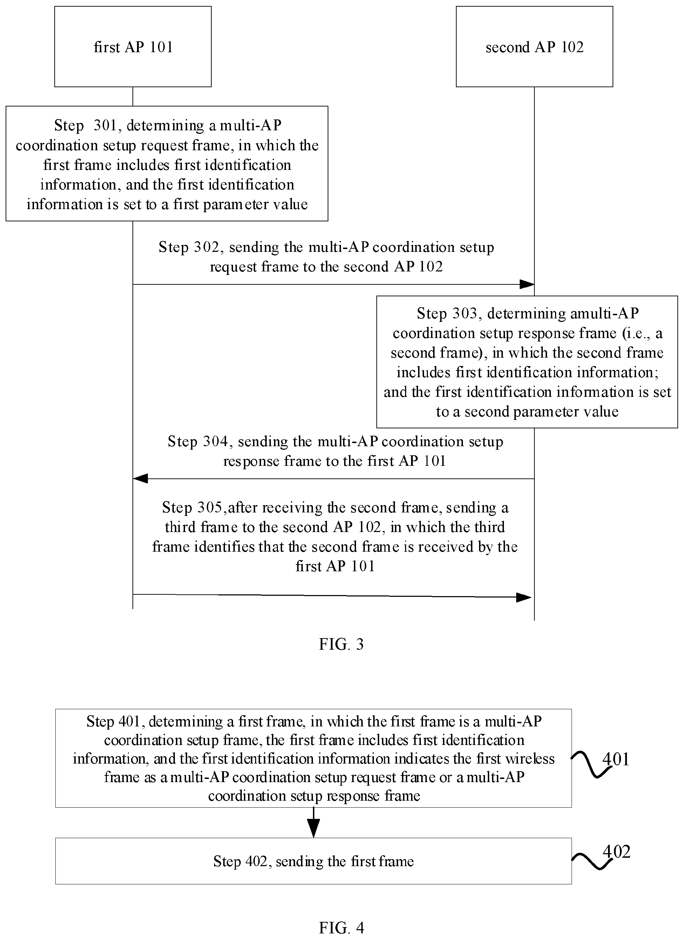

As shown in FIG. 3, in some embodiments of the present disclosure, the method includes the following steps.

Step 301, the first AP 101 determines a multi-AP coordination setup request frame, in which the first frame includes first identification information, and the first identification information is set to a first parameter value.

Optionally, for the value of the first parameter value, reference may be made to the foregoing description, which will not be repeated here.

Optionally, the first frame further includes second identification information and third identification information, the second identification information indicates the coordination type initiated by the first AP 101 to the second AP 102, and the third identification information indicates coordination parameter information of the coordination type initiated by the first AP 101 to the second AP 102.

For the manner in which the first identification information, the second identification information, and the third identification information are carried in the first frame, and the settings of the coordination type and the coordination parameter information, reference may be made to the foregoing description, which will not be repeated here.

Step 302, the first AP 101 sends the multi-AP coordination setup request frame to the second AP 102.

Step 303, the second AP 102 determines a multi-AP coordination setup response frame (i.e., a second frame), in which the second frame includes first identification information; and the first identification information is set to a second parameter value.

Optionally, the multi-AP coordination setup response frame has the same frame format as the above-mentioned first frame. The first information field in the first frame is set to the first parameter value, and the first information field in the second frame is set to the second parameter value. The second information field in the second frame is the same as the second information field in the first frame, and the second field in the second frame is also the same as the second field in the first frame, which will not be repeated here.

Taking as an example that the first field is a MAP coordination control field in the first frame, the first information field may be a request type subfield in the MAP coordination control field, the second information field may be a coordination type subfield in the MAP coordination control field, and the second field may be a MAP coordination parameter information field in the first frame, the request type subfield in the first frame is set to the first parameter value, and the request type subfield in the second frame is set to the second parameter value. The coordination type subfield in the second frame is the same as the coordination type subfield in the first frame, and the MAP coordination parameter information field in the second frame is also the same as the MAP coordination parameter information field in the first frame, which will not be repeated here.

Step 304, the second AP 102 sends the multi-AP coordination setup response frame to the first AP 101.

In the embodiments of the present disclosure, the first AP 101 sends the multi-AP coordination setup request frame to the second AP 102 to initiate a request to establish multi-AP coordination with the second AP 102, and the second AP 102 sends the multi-AP coordination setup response frame (i.e., the second frame) for the multi-AP coordination setup request frame to the first AP 101, so as to respond to the multi-AP coordination setup request frame initiated by the first AP 101.

Step 305, after receiving the second frame, the first AP 101 sends a third frame to the second AP 102, in which the third frame identifies that the second frame is received by the first AP 101.

Optionally, the third frame is an acknowledgment (ACK) frame.

Optionally, after the second AP 102 receives the third frame sent by the first AP 101, the second AP 102 identifies that the multi-AP coordination establishment between the first AP 101 and the second AP 102 is successful.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "bit", "data", "program", "chip" may be used interchangeably.

In some embodiments, terms such as "moment", "time point", "time", "time position" may be used interchangeably, and terms such as "duration", "period", "time window", "window", "time" may be used interchangeably.

In some embodiments, terms such as wireless access scheme and waveform may be used interchangeably.

In some embodiments, terms such as "certain", "preset", "predetermined", "configured", "indicated", "a certain", "any", "first" may be used interchangeably, and "certain A", "preset A", "predetermined A", "configured A", "indicated A", "a certain A", "any A", "first A" may be interpreted as A predetermined in a protocol or the like, may also be interpreted as A obtained through setting, configuration, or indication, and may also be interpreted as a specific A, a certain A, any A, or a first A, etc., but is not limited thereto.

In some embodiments, determination or decision may be made by a value represented by 1 bit (0 or 1), by a true/false value represented by true or false (boolean), or by a comparison of numerical values (for example, comparison with a predetermined value), but is not limited thereto.

In some embodiments, "not expecting to receive" may be interpreted as not receiving on time domain resources and/or frequency domain resources, or may be interpreted as not performing subsequent processing on data etc. after receiving the data etc.; "not expecting to send" may be interpreted as not sending, or may be interpreted as sending but not expecting the receiving party to respond to the sent content.

The method for coordinating multiple APs involved in the embodiments of the present disclosure may include at least one of the foregoing steps and the embodiments. For example, step 201 may be implemented as an independent embodiment, step 301 may be implemented as an independent embodiment, step 303 may be implemented as an independent embodiment, step 305 may be implemented as an independent embodiment; the combination of step 201 and step 202 may be implemented as an independent embodiment, the combination of step 301 and step 302 may be implemented as an independent embodiment, the combination of step 303 and step 304 may be implemented as an independent embodiment, the combination of step 305 and step 306 may be implemented as an independent embodiment, the combination of step 301, step 302, step 303, and step 304 may be implemented as an independent embodiment, the combination of step 301, step 302, step 303, step 304, step 305, and step 306 may be implemented as an independent embodiment, the combination of step 305 and step 306 may be implemented as an independent embodiment, but is not limited thereto.

In some embodiments, reference may be made to other optional implementations recorded before or after the description corresponding to FIG. 2.

FIG. 4 is a first flow schematic diagram illustrating a method for coordinating multiple APs according to an embodiment of the present disclosure.

As shown in FIG. 4, the method may be applied to a first AP 101, and the method includes the following steps.

Step 401, a first frame is determined, in which the first frame is a multi-AP coordination setup frame, the first frame includes first identification information, and the first identification information indicates the first frame as a multi-AP coordination setup request frame or a multi-AP coordination setup response frame.

Optionally, in the embodiments of the present disclosure, the first identification information is carried in a first information field of the first frame, and the first information field is carried in a first field of the first frame. In a case the first information field is set to a first parameter value, the first identification information identifies the first frame as the multi-AP coordination setup request frame. In a case the first information field is set to a second parameter value, the first identification information identifies the first frame as the multi-AP coordination setup response frame.

Optionally, in the embodiments of the present disclosure, the first frame further includes second identification information and third identification information, the second identification information indicates one or more multi-AP coordination types, and the third identification information indicates coordination parameter information corresponding to the one or more multi-AP coordination types.

Optionally, in the embodiments of the present disclosure, the second identification information is carried in a second information field of the first frame, the second information field is carried in the first field of the first frame, and the third identification information is carried in a second field of the first frame.

Optionally, in the embodiments of the present disclosure, the second information field is set to a preset parameter value, and the second identification information identifies a multi-AP coordination type corresponding to the preset parameter value; or the second information field includes at least two bits, the at least two bits correspond to the coordination types, the second identification information identifies a multi-AP coordination type corresponding to a target bit, and a parameter value of the target bit is set to a third parameter value.

Optionally, in the embodiments of the present disclosure, the first frame further includes fourth identification information and fifth identification information. The fourth identification information identifies a frame type of the first frame as a UHR action frame; and the fifth identification information is set to a fourth parameter value, identifying a frame type of the UHR action frame as a multi-AP coordination setup frame.

For optional implementations of step 401, reference may be made to the optional implementations of step 201 in FIG. 2 and other related parts of the embodiments involved in FIG. 2, which will not be repeated here.

Step 402, the first frame is sent.

Optionally, in the embodiments of the present disclosure, the first frame is a multi-AP coordination setup request frame, and the method further includes: receiving a second frame, in which the second frame is a multi-AP coordination setup response frame for the first frame.

Optionally, in the embodiments of the present disclosure, after receiving the second frame, the method further includes: sending a third frame, in which the third frame identifies that the second frame is received by the first access point device 101.

For optional implementations of step 402, reference may be made to the optional implementations of step 201 in FIG. 2 and other related parts of the embodiments involved in FIG. 2, which will not be repeated here.

The method for coordinating multiple APs involved in the embodiments of the present disclosure may include at least one of the foregoing steps and the embodiments. For example, step 401 may be implemented as an independent embodiment, and the combination of step 401 and step 402 may be implemented as an independent embodiment, but is not limited thereto.

In some embodiments, reference may be made to other optional implementations recorded before or after the description corresponding to FIG. 4.

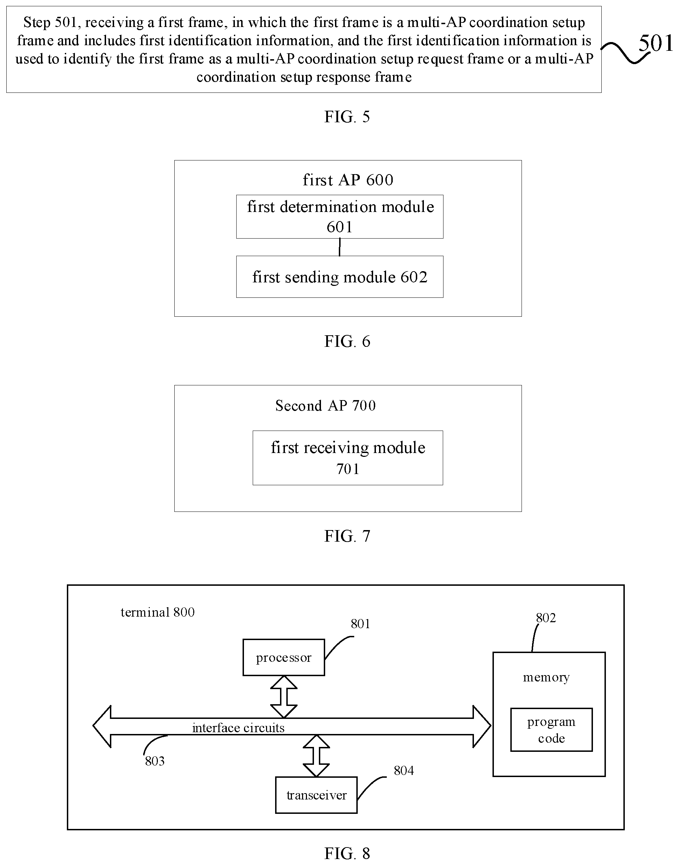

FIG. 5 is a second flow schematic diagram illustrating a method for coordinating multiple APs according to an embodiment of the present disclosure.

As shown in FIG. 5, the method may be applied to a second access point device 102, and the method includes the following steps.

Step 501, a first frame is received, in which the first frame is a multi-AP coordination setup frame and includes first identification information, and the first identification information indicates the first frame as a multi-AP coordination setup request frame or a multi-AP coordination setup response frame.

Optionally, in the embodiments of the present disclosure, the first identification information is carried in a first information field of the first frame, and the first information field is carried in a first field of the first frame. In a case the first information field is set to a first parameter value, the first identification information identifies the first frame as the multi-AP coordination setup request frame. In a case the first information field is set to a second parameter value, the first identification information identifies the first frame as the multi-AP coordination setup response frame.

Optionally, in the embodiments of the present disclosure, the first frame further includes second identification information and third identification information, the second identification information indicates one or more multi-AP coordination types, and the third identification information indicates coordination parameter information corresponding to the one or more multi-AP coordination types.

Optionally, in the embodiments of the present disclosure, the second identification information is carried in a second information field of the first frame, and the second information field is carried in the first field of the first frame. The third identification information is carried in a second field of the first frame.

Optionally, in the embodiments of the present disclosure, the second information field is set to a preset parameter value, and the second identification information identifies a multi-AP coordination type corresponding to the preset parameter value; or the second information field includes at least two bits, the at least two bits correspond to the coordination types, the second identification information identifies a multi-AP coordination type corresponding to a target bit, and a parameter value of the target bit is set to a third parameter value.

Optionally, in the embodiments of the present disclosure, the first frame further includes fourth identification information and fifth identification information, the fourth identification information identifies a frame type of the first frame as a UHR action frame, and the fifth identification information is set to a fourth parameter value, identifying a frame type of the UHR action frame as a multi-AP coordination setup frame.

Optionally, in the embodiments of the present disclosure, the first frame is a multi-AP coordination setup request frame, and the method further includes: determining a second frame, in which the second frame is a multi-AP coordination setup response frame for the first frame; and sending the second frame.

Optionally, in the embodiments of the present disclosure, after sending the second frame, the method further includes: receiving a third frame, in which the third frame identifies that the second frame is received by the first access point device.

For optional implementations of step 501, reference may be made to the optional implementations of step 201 in FIG. 2 and other related parts of the embodiments involved in FIG. 2, which will not be repeated here.

In some embodiments, reference may be made to other optional implementations recorded before or after the description corresponding to FIG. 5.

Embodiments of the present disclosure further provide an apparatus for implementing any of the above methods. For example, an apparatus is provided, the apparatus including units or modules configured to implement the steps performed by a terminal in any of the above methods. As another example, another apparatus is further provided, including units or modules configured to implement the steps performed by a network device (for example, an access network device, a core network function node, a core network device, etc.) in any of the above methods.

It should be understood that the division of units or modules in the above apparatus is merely a division of logical functions. In actual implementation, they may be fully or partially integrated into one physical entity, or may be physically separated. In addition, the units or modules in the apparatus may be implemented in a form of a processor invoking software: for example, the apparatus includes a processor, the processor is connected to a memory, the memory stores instructions, and the processor invokes the instructions stored in the memory to implement any of the above methods or to realize the functions of the units or modules of the above apparatus. The processor is, for example, a general-purpose processor, such as a central processing unit (CPU) or a microprocessor, and the memory is a memory inside the apparatus or a memory outside the apparatus. Alternatively, the units or modules in the apparatus may be implemented in a form of hardware circuits, and the functions of some or all of the units or modules may be realized by designing the hardware circuits, and the above hardware circuits may be understood as one or more processors. For example, in one implementation, the above hardware circuit is an application-specific integrated circuit (ASIC), and the functions of some or all of the above units or modules are realized by designing the logical relationships of elements within the circuit. For another example, in another implementation, the above hardware circuit may be implemented by a programmable logic device (PLD), taking a field programmable gate array (FPGA) as an example, which may include a large number of logic gate circuits, and the connection relationships between the logic gate circuits are configured by a configuration file, thereby realizing the functions of some or all of the above units or modules. All units or modules of the above apparatus may be implemented entirely in the form of a processor invoking software, or entirely in the form of hardware circuits, or partially in the form of a processor invoking software and the remaining part in the form of hardware circuits.

In the embodiments of the present disclosure, a processor is a circuit having signal processing capabilities. In one implementation, the processor may be a circuit having instruction reading and execution capabilities, such as a central processing unit (CPU), a microprocessor, a graphics processing unit (GPU) (which may be understood as a microprocessor), or a digital signal processor (DSP), etc. In another implementation, the processor may realize certain functions through the logical relationships of hardware circuits, and the logical relationships of the above hardware circuits are fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration file to realize the configuration of the hardware circuit may be understood as the process of the processor loading instructions to realize the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 6 is a first structural schematic diagram of an access point device according to an embodiment of the present disclosure. As shown in FIG. 6, the access point device is a first access point device, and the first access point device 600 may include at least one of a first determination module 601, a first sending module 602, and the like.

In some embodiments, the first determination module 601 is configured to determine a first frame, in which the first frame is a multi-AP coordination setup frame, the first frame includes first identification information, and the first identification information indicates the first frame as a multi-AP coordination setup request frame or a multi-AP coordination setup response frame; and the first sending module 602 is configured to send the first frame.

Optionally, in some embodiments, the first identification information is carried in a first information field of the first frame, and the first information field is carried in a first field of the first frame. The first information field is set to a first parameter value, the first identification information identifies the first frame as the multi-AP coordination setup request frame; and the first information field is set to a second parameter value, the first identification information identifies the first frame as the multi-AP coordination setup response frame.

Optionally, in some embodiments, the first frame further includes second identification information and third identification information, the second identification information indicates one or more multi-AP coordination types, and the third identification information indicates coordination parameter information corresponding to the one or more multi-AP coordination types.

In the foregoing embodiment, the second identification information carried in the first frame identifies the one or more multi-AP coordination types, and the third identification information carried in the first frame identifies the coordination parameter information corresponding to each multi-AP coordination type identified by the second identification information, thereby implementing a negotiation of a coordination strategy for multi-AP coordination setup and the parameter information of a specific strategy through the first frame.

Optionally, in some embodiments, the second identification information is carried in a second information field of the first frame, and the second information field is carried in the first field of the first frame; and the third identification information is carried in a second field of the first frame.

Optionally, in some embodiments, in a case the second information field is set to a preset parameter value, the second identification information identifies a multi-AP coordination type corresponding to the preset parameter value; or the second information field includes at least two bits, the at least two bits correspond to the coordination types, and the second identification information identifies a multi-AP coordination type corresponding to a target bit, in which a parameter value of the target bit is set to a third parameter value.

Optionally, in some embodiments, the first frame further includes fourth identification information and fifth identification information, the fourth identification information identifies a frame type of the first frame as a UHR action frame, and the fifth identification information is set to a fourth parameter value, identifying a frame type of the UHR action frame as the multi-AP coordination setup frame.

Optionally, in some embodiments, the first access point device 600 may further include a second receiving module. The first frame is the multi-AP coordination setup request frame, and the second receiving module is configured to: receive a second frame, in which the second frame is the multi-AP coordination setup response frame for the first frame.

Optionally, the first sending module 602 and the second receiving module may be the same module.

Optionally, in some embodiments, the first sending module 602 is further configured to send a third frame after receiving the second frame, in which the third frame identifies that the second frame is received by the first access point device.

FIG. 7 is a second structural schematic diagram of an access point device according to an embodiment of the present disclosure. As shown in FIG. 7, the access point device is a second access point device, and the second access point device 700 may include: a first receiving module 701.

In some embodiments, the first receiving module 701 is configured to receive a first frame, in which the first frame is a multi-AP coordination setup frame, the first frame includes first identification information, and the first identification information indicates the first frame as a multi-AP coordination setup request frame or a multi-AP coordination setup response frame.

Optionally, in some embodiments, the first identification information is carried in a first information field of the first frame, and the first information field is carried in a first field of the first frame, in which in a case the first information field is set to a first parameter value, the first identification information identifies the first frame as the multi-AP coordination setup request frame; and in a case the first information field is set to a second parameter value, the first identification information identifies the first frame as the multi-AP coordination setup response frame.

Optionally, in some embodiments, the first frame further includes second identification information and third identification information; the second identification information indicates one or more multi-AP coordination types; and the third identification information indicates coordination parameter information corresponding to the one or more multi-AP coordination types.

Optionally, in some embodiments, the second identification information is carried in a second information field of the first frame, and the second information field is carried in the first field of the first frame. The third identification information is carried in a second field of the first frame.

Optionally, in some embodiments, in a case the second information field is set to a preset parameter value, the second identification information identifies a multi-AP coordination type corresponding to the preset parameter value; or the second information field includes at least two bits, the at least two bits correspond to the coordination types, and the second identification information identifies a multi-AP coordination type corresponding to a target bit, in which a parameter value of the target bit is set to a third parameter value.

Optionally, in some embodiments, the first frame further includes fourth identification information and fifth identification information, the fourth identification information identifies a frame type of the first frame as a UHR action frame, and the fifth identification information is set to a fourth parameter value, identifying a frame type of the UHR action frame as the multi-AP coordination setup frame.

Optionally, in some embodiments, the second access point device 700 may further include a second determination module and a second sending module; in a case the first frame is the multi-AP coordination setup request frame, the second determination module is configured to determine a second frame, in which the second frame is the multi-AP coordination setup response frame for the first frame; and the second sending module is configured to send the second frame.

Optionally, in some embodiments, the first receiving module 701 is further configured to receive a third frame after sending the second frame, in which the third frame identifies that the second frame is received by the first access point device.

Optionally, the first receiving module 701 and the second sending module may be the same module.

FIG. 8 is a structural schematic diagram of a terminal 800 (for example, user equipment, etc.) according to an embodiment of the present disclosure. The terminal 800 may be a chip, a chip system, or a processor that supports a network device to implement any of the above methods, and may also be a chip, a chip system, or a processor that supports a terminal to implement any of the above methods. The terminal 800 may be used to implement the methods described in the above method embodiments, and for details, reference may be made to the description in the above method embodiments.

As shown in FIG. 8, the terminal 800 includes one or more processors 801. The processor 801 may be a general-purpose processor or a dedicated processor, etc., for example, a baseband processor or a central processing unit. The baseband processor may be used to process communication protocols and communication data, and the central processing unit may be used to control a communication device (such as a base station, a baseband chip, a terminal device, a terminal device chip, a DU or a CU, etc.), execute programs, and process program data. The terminal 800 is configured to perform any of the above methods.

In some embodiments, the terminal 800 further includes one or more memories 802 for storing instructions. Optionally, all or part of the memory 802 may be also located outside the terminal 800.

In some embodiments, the terminal 800 further includes one or more transceivers 804. When the terminal 800 includes one or more transceivers 804, the transceiver 804 performs at least one of the communication steps such as sending and/or receiving in the above methods (for example, step 202, step 302, step 304, step 305, step 402, step 501, but not limited thereto), and the processor 801 performs at least one of the other steps (for example, step 201, step 301, step 303, but not limited thereto).

In some embodiments, a transceiver may include a receiver and/or a transmitter, and the receiver and the transmitter may be separated or integrated together. Optionally, terms such as transceiver, transceiving unit, transceiver, transceiving circuit may be used interchangeably, terms such as transmitter, sending unit, transmitter, sending circuit may be used interchangeably, and terms such as receiver, receiving unit, receiver, receiving circuit may be used interchangeably.

In some embodiments, the terminal 800 may include one or more interface circuits 803. Optionally, the interface circuit 803 is connected to the memory 802, and the interface circuit 803 may be configured to receive signals from the memory 802 or other devices, and may be configured to send signals to the memory 802 or other devices. For example, the interface circuit 803 may read instructions stored in the memory 802 and send the instructions to the processor 801.

The terminal 800 described in the above embodiments may be a communication device such as user equipment, but the scope of the terminal 800 described in the present disclosure is not limited thereto, and the structure of the terminal 800 may not be limited by FIG. 8. The communication device may be an independent device or may be part of a larger device. For example, the communication device may be: (1) an independent integrated circuit IC, or a chip, or a chip system or subsystem; (2) a set having one or more ICs, optionally, the above IC set may also include a storage component for storing data, programs; (3) an ASIC, such as a modem; (4) a module that can be embedded in other devices; (5) a receiver, a terminal device, an intelligent terminal device, a cellular phone, a wireless device, a handheld set, a mobile unit, an in-vehicle device, a network device, a cloud device, an artificial intelligence device, etc.; (6) others, etc.

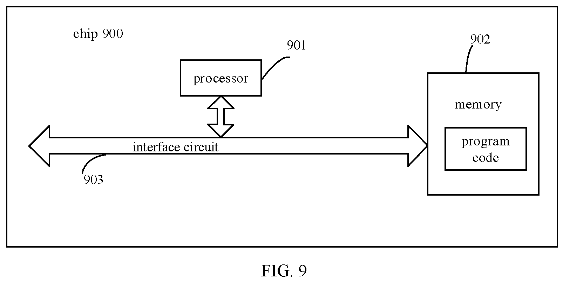

FIG. 9 is a structural schematic diagram of a chip 900 according to an embodiment of the present disclosure. For the case where a terminal 1300 may be a chip or a chip system, reference may be made to the structural diagram of the chip 900 shown in FIG. 9, but is not limited thereto.

The chip 900 includes one or more processors 901, and the chip 900 is configured to perform any of the above methods.

In some embodiments, the chip 900 further includes one or more interface circuits 903. Optionally, the interface circuit 903 is connected to a memory 902, and the interface circuit 903 may be configured to receive signals from the memory 902 or other devices, and the interface circuit 903 may be configured to send signals to the memory 902 or other devices. For example, the interface circuit 903 may read instructions stored in the memory 902 and send the instructions to the processor 901.

In some embodiments, the interface circuit 903 performs at least one of the communication steps such as sending and/or receiving in the above methods (for example, step 202, step 302, step 304, step 305, step 402, step 501, but not limited thereto), and the processor 901 performs at least one of the other steps (for example, step 201, step 301, step 303, but not limited thereto).

In some embodiments, terms such as interface circuit, interface, transceiver pin, transceiver may be used interchangeably.

In some embodiments, the chip 900 further includes one or more memories 902 for storing instructions. Optionally, all or part of the memory 902 may be located outside the chip 900.

The present disclosure further provides a storage medium, the storage medium stores instructions, and when the instructions are executed on the terminal 800, the terminal 800 is caused to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present disclosure further provides a program product, when executed by the terminal 800, the terminal 800 is caused to perform any of the above methods. Optionally, the program product is a computer program product.

The present disclosure further provides a computer program, when running on a computer, the computer is caused to perform any of the above methods.

## Claims

1. A method for coordinating multiple access points (APs), performed by a first access point device, comprising:
determining a first frame, wherein the first frame is a multi-AP coordination setup frame, the first frame comprises first identification information, which indicates that the first frame is a multi-AP coordination setup request frame or a multi-AP coordination setup response frame; and
sending the first frame.

2. The method according to claim 1, wherein the first identification information is carried in a first information field of the first frame, and the first information field is carried in a first field of the first frame,
wherein the first information field is set to a first parameter value, the first identification information identifies the first frame as the multi-AP coordination setup request frame; and
the first information field is set to a second parameter value, the first identification information identifies the first frame as the multi-AP coordination setup response frame.

3. The method according to claim 1, wherein the first frame further comprises second identification information and third identification information, the second identification information indicates one or more multi-AP coordination types, and the third identification information indicates coordination parameter information corresponding to the one or more multi-AP coordination types.

4. The method according to claim 3, wherein the second identification information is carried in a second information field of the first frame, and the second information field is carried in the first field of the first frame; and
the third identification information is carried in a second field of the first frame.

5. The method according to claim 4, wherein
in a case the second information field is set to a preset parameter value, the second identification information identifies a multi-AP coordination type corresponding to the preset parameter value; or
the second information field comprises at least two bits, the at least two bits correspond to the one or more multi-AP coordination types, and the second identification information identifies a multi-AP coordination type corresponding to a target bit, wherein a parameter value of the target bit is set to a third parameter value.

6. The method according to any one of claims 1 to 5, wherein the first frame further comprises fourth identification information and fifth identification information;
the fourth identification information identifies a frame type of the first frame as an ultra high reliability (UHR) action frame, and the fifth identification information is set to a fourth parameter value, identifying a frame type of the UHR action frame as the multi-AP coordination setup frame.

7. The method according to claim 6, wherein the first frame is the multi-AP coordination setup request frame, and the method further comprises:
receiving a second frame, wherein the second frame is the multi-AP coordination setup response frame for the first frame.

8. The method according to claim 7, wherein after receiving the second frame, the method further comprises:
sending a third frame, wherein the third frame identifies that the second frame is received by the first access point device.

9. A method for coordinating multiple access points (APs), performed by a second access point device, comprising:
receiving a first frame, wherein the first frame is a multi-AP coordination setup frame, the first frame comprises first identification information, which indicates that the first frame is a multi-AP coordination setup request frame or a multi-AP coordination setup response frame.

10. The method according to claim 9, wherein the first identification information is carried in a first information field of the first frame, and the first information field is carried in a first field of the first frame;
wherein the first information field is set to a first parameter value, the first identification information identifies the first frame as the multi-AP coordination setup request frame; and
the first information field is set to a second parameter value, the first identification information identifies the first frame as the multi-AP coordination setup response frame.

11. The method according to claim 9, wherein the first frame further comprises second identification information and third identification information, the second identification information indicates one or more multi-AP coordination types, and the third identification information indicates coordination parameter information corresponding to the one or more multi-AP coordination types.

12. The method according to claim 11, wherein the second identification information is carried in a second information field of the first frame, and the second information field is carried in the first field of the first frame; and
the third identification information is carried in a second field of the first frame.

13. The method according to claim 12, wherein
in a case the second information field is set to a preset parameter value, the second identification information identifies a multi-AP coordination type corresponding to the preset parameter value; or
the second information field comprises at least two bits, the at least two bits correspond to the one or more multi-AP coordination types, and the second identification information identifies a multi-AP coordination type corresponding to a target bit, wherein a parameter value of the target bit is set to a third parameter value.

14. The method according to any one of claims 9 to 13, wherein the first frame further comprises fourth identification information and fifth identification information;
the fourth identification information identifies a frame type of the first frame as an ultra high reliability (UHR) action frame, and the fifth identification information identifies a fourth parameter value.

15. The method according to claim 14, wherein in a case the first frame is the multi-AP coordination setup request frame, the method further comprises:
determining a second frame, wherein the second frame is the multi-AP coordination setup response frame for the first frame; and
sending the second frame.

16. The method according to claim 15, wherein after sending the second frame, the method further comprises:
receiving a third frame, wherein the third frame identifies that the second frame is received by a first access point device.

17. An access point device, wherein the access point device is a first access point device and comprises:
a first determination module, configured to determine a first frame, wherein the first frame is a multi-access point (multi-AP) coordination setup frame, the first frame comprises first identification information, which indicates that the first frame is a multi-AP coordination setup request frame or a multi-AP coordination setup response frame; and
a first sending module, configured to send the first frame.

18. An access point device, wherein the access point device is a second access point device and comprises:
a first receiving module, configured to receive a first frame,
wherein the first frame is a multi-access point (multi-AP) coordination setup frame, the first frame comprises first identification information, which indicates that the first frame is a multi-AP coordination setup request frame or a multi-AP coordination setup response frame.

19. An access point device, comprising:
one or more processors,
wherein the access point device is configured to perform the method according to any one of claims 1 to 8 or any one of claims 9 to 16.

20. A communication system, comprising a first access point device and a second access point device, wherein the first access point device is configured to implement the method according to any one of claims 1 to 8, and the second access point device is configured to implement the method according to any one of claims 9 to 16.

21. A storage medium storing instructions, when executed on a communication device, the communication device is caused to perform the method according to any one of claims 1 to 8 or any one of claims 9 to 16.
